(19) Europäisches Patentamt
European Patent Office
Office européen des brevets

(11) **EP 3 053 957 A1**

(12) **EUROPEAN PATENT APPLICATION**
published in accordance with Art. 153(4) EPC

(43) Date of publication:
**10.08.2016 Bulletin 2016/32**

(21) Application number: **14850983.9**

(22) Date of filing: **16.09.2014**

(51) Int Cl.:
**C08L 25/18** (2006.01)  **H01M 4/86** (2006.01)
**H01M 8/02** (2006.01)  **H01M 8/10** (2006.01)

(86) International application number:
**PCT/JP2014/004760**

(87) International publication number:
**WO 2015/049839 (09.04.2015 Gazette 2015/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **01.10.2013 JP 2013206532**

(71) Applicant: **Nitto Denko Corporation**
**Ibaraki-shi, Osaka 567-8680 (JP)**

(72) Inventor: **SUGITANI, Tooru**
**Ibaraki-shi, Osaka 567-8680 (JP)**

(74) Representative: **Hart-Davis, Jason et al**
**Cabinet Beau de Loménie**
**158, rue de l'Université**
**75340 Paris Cedex 07 (FR)**

(54) **IONOMER SOLUTION IN WHICH ANION EXCHANGE RESIN IS DISSOLVED IN SOLVENT**

(57)    Provided is an ionomer solution including an anion-exchange resin and a solvent. The anion-exchange resin is dissolved in the solvent, the anion-exchange resin includes a matrix resin and an anion-exchange group, the matrix resin includes a styrene elastomer, and the anion-exchange group is a quaternary ammonium salt group having at least one unit derived from an amine selected from the group consisting of an N,N-dimethylalkylamine having an alkyl group having two or more carbon atoms and a bicycloalkane having a nitrogen atom at a bridgehead position.

**Description**

TECHNICAL FIELD

The present invention relates to an ionomer solution containing an anion-exchange resin dissolved in a solvent.

BACKGROUND ART

In a polymer electrolyte fuel cell, a cathode catalyst layer and an anode catalyst layer are formed on both sides of an electrolyte membrane, respectively. These catalyst layers are each formed of an ionomer and a catalyst. The ionomer serves to provide ionic conductivity; that is, the ionomer contains a material having ionic conductivity, such as an ion-exchange resin.

Ion-exchange resins have ion-exchange groups. Anion-exchange resins, for example, have anion-exchange groups. Such anion-exchange groups are produced by the use of trimethylamine in many cases (Patent Literature 1, for example).

CITATION LIST

Patent Literature 1: JP 2002-367626 A

SUMMARY OF INVENTION

Technical Problem

Trimethylamine is a compound that is a gas at ordinary temperatures and pressures and emits a characteristic bad odor.

In view of such circumstances, the present invention aims to produce an anion-exchange resin having a unit derived from an amine with better handling properties, and to provide an ionomer solution containing this anion-exchange resin dissolved in a solvent.

Solution to Problem

The present invention provides an ionomer solution including an anion-exchange resin and a solvent, wherein the anion-exchange resin is dissolved in the solvent, the anion-exchange resin includes a matrix resin and an anion-exchange group, the matrix resin includes a styrene elastomer, and the anion-exchange group is a quaternary ammonium salt group having at least one unit derived from an amine selected from the group consisting of an N,N-dimethylalkylamine having an alkyl group having two or more carbon atoms and a bicycloalkane having a nitrogen atom at a bridgehead position.

In addition, the present invention provides a catalyst electrode composition for polymer electrolyte fuel cells that includes an ionomer solution produced by the present invention and an electrode catalyst. Furthermore, a member for polymer electrolyte fuel cells of the present invention is a member for polymer electrolyte fuel cells that includes an anion-exchange membrane, the anion-exchange membrane having a layer on at least one side thereof, the layer being formed of the catalyst electrode composition of the present invention. A polymer electrolyte fuel cell of the present invention includes the member for polymer electrolyte fuel cells that is obtained by the present invention.

Advantageous Effects of Invention

In the ionomer solution of the present invention, an anion-exchange resin having amine units derived from an N,N-dimethylalkylamine having an alkyl group having two or more carbon atoms and/or a bicycloalkane having a nitrogen atom at a bridgehead position is dissolved in a solvent. These amines constituting the amine units are relatively easy to handle, and the amine units are superior in ion-exchange capacity and ionic conductivity to other types of amine units except for trimethylamine units. Therefore, with the present invention, it is possible to obtain an ionomer solution that contains amine units derived from a relatively easily-handled amine and that has good ion-exchange capacity and ionic conductivity.

DESCRIPTION OF EMBODIMENTS

Hereinafter, an embodiment of the present invention will be described. Although the following describes the embodiment of the present invention by using examples, the present invention is not limited to the examples described below.

An ionomer solution of the present embodiment is an ionomer solution including an anion-exchange resin and a solvent. The anion-exchange resin is dissolved in the solvent, the anion-exchange resin includes a matrix resin and an anion-exchange group, the matrix resin includes a styrene elastomer, and the anion-exchange group is a quaternary ammonium salt group having at least one unit derived from an amine selected from the group consisting of an N,N-dimethylalkylamine having an alkyl group having two or more carbon atoms and a bicycloalkane having a nitrogen atom at a bridgehead position.

In the present embodiment, the ionomer solution includes an anion-exchange resin and a solvent, and the anion-exchange resin is dissolved in the solvent.

The solvent included in the ionomer solution is not particularly limited, as long as the anion-exchange resin is soluble in the solvent. Examples of the solvent include methanol, ethanol, 1-propanol, 2-propanol, n-butanol, methyl ethyl ketone, acetonitrile, nitromethane, toluene, tetrahydrofuran, dimethyl sulfoxide, N-methylpyrrolidone, N,N-dimethylformamide, and N,N-dimethylacetamide. One of these solvents may be used alone, or two or more of the solvents may be used in combination. Where necessary, a highly-volatile solvent may be used.

In the present embodiment, the anion-exchange resin included in the ionomer solution includes a matrix resin and an anion-exchange group.

The styrene elastomer included in the matrix resin is not particularly limited. A block copolymer constituted by a hard block (styrene moiety) and a soft block (elastomer moiety) can be used. Examples of such a styrene elastomer include styrene-butadiene-styrene block copolymer (SBS), styrene-(butadiene/butylene)-styrene block copolymer (SBBS), styrene-(ethylene/butylene)-styrene block copolymer (SEBS), styrene-isobutylene-styrene block copolymer (SIBS), styrene-isoprene-styrene block copolymer (SIS), styrene-(ethylene/propylene)-styrene block copolymer (SEPS), styrene-(ethylene/propylene) block copolymer (SEP), and styrene-(ethylene-ethylene/propylene)-styrene block copolymer (SEEPS). Suitable as the styrene elastomer are those whose elastomer moiety has a saturated structure, such as styrene-(ethylene/butylene)-styrene block copolymer (SEBS), styrene-isobutylene-styrene block copolymer (SIBS), and styrene-(ethylene/propylene)-styrene block copolymer (SEPS). This is because if the elastomer moiety of the styrene elastomer has an unsaturated bond, the unsaturated bond portion may, at the time of introduction of the anion-exchange group into the styrene elastomer, undergo a reaction which leads to gelation.

The weight of the styrene moiety of the styrene elastomer is not particularly limited, and is, for example, 10 to 70%, and particularly 25 to 55% of the total weight of the styrene elastomer. The use of such a styrene elastomer is suitable for improving the mechanical properties and electrical properties of the anion-exchange resin.

The matrix resin may further include an alkyl chain bonded to an aromatic ring of the styrene elastomer. In this case, the anion-exchange group may be bonded to this alkyl chain. That is, the anion-exchange resin includes the styrene elastomer, the alkyl chain (referred to as an alkyl chain R hereinafter), and the anion-exchange group, and the styrene elastomer and the anion-exchange group are coupled together via the alkyl chain R bonded to the aromatic ring of the styrene elastomer. The alkyl chain R preferably has 1 to 4 carbon atoms, and is specifically a methyl, ethyl, propyl, or butyl chain.

The alkyl chain R may be obtained by introduction of a halogenated alkyl group into the aromatic ring of the styrene elastomer. The halogen of the halogenated alkyl group (R-X) is, for example, iodine, bromine, chlorine, or fluorine, and particularly bromine or chlorine. The halogenated alkyl group is, for example, a chloromethyl, chloroethyl, or bromobutyl group, and particularly a chloromethyl group.

As an example of introducing the halogenated alkyl group into the aromatic ring of the styrene elastomer, an example in which the halogenated alkyl group is a chloromethyl group will be discussed. A chloromethyl group can be introduced into the aromatic ring of the styrene elastomer by reacting the styrene elastomer with a chloromethylating agent. The chloromethylating agent is, for example, chloromethyl methyl ether, 1,4-bis(chloromethoxy)butane, 1-chloromethoxy-4-chlorobutane, a combination of formaldehyde and hydrogen chloride, or a combination of paraformaldehyde and hydrogen chloride, and is particularly chloromethyl methyl ether. The use of such a chloromethylating agent allows proper introduction of the chloromethyl group into the aromatic ring of the styrene elastomer. A catalyst that can be used for this reaction is, for example, tin chloride or zinc chloride. This reaction can be carried out, for example, at temperatures ranging from room temperature to 120°C, and particularly at temperatures ranging from 35°C to 80°C.

When a halogenated alkyl group is introduced into the styrene elastomer, the styrene elastomer may be used in the form of a solute dissolved in a solvent or the like. For example, when chloromethyl methyl ether is used as the chloromethylating agent, the styrene elastomer may be used in the form of a solute dissolved in chloromethyl methyl ether or an organic solvent. The organic solvent is not particularly limited as long as the styrene elastomer is soluble in the organic solvent. The organic solvent is, for example, a halogen-containing hydrocarbon such as chloroform, dichloroethane, or 1,1,2,2-tetrachloroethane.

The anion-exchange group included in the anion-exchange resin is a quaternary ammonium salt group having an amine unit derived from an N,N-dimethylalkylamine having an alkyl group having two or more carbon atoms and/or a bicycloalkane having a nitrogen atom at a bridgehead position. When the matrix resin contains the alkyl chain R bonded to the aromatic ring of the styrene elastomer, the amine unit is preferably bonded to the alkyl chain R (for example, when the amine unit is one derived from n-butyldimethylamine, the amine unit and the alkyl chain form $R-N(CH_3)_2C_4H_9$, where R is the alkyl chain). That is, the anion-exchange group is bonded to the styrene elastomer via the alkyl chain R.

The quaternary ammonium salt group having the amine unit can be formed by a reaction of a halogenated alkyl group and an amine (reaction of conversion to a quaternary amine). For example, when the amine unit is a n-butyldimethylamine unit, a quaternary ammonium salt group having the n-butyldimethylamine unit can be formed by a reaction of a halogenated alkyl group and n-butyldimethylamine.

The amine used in the present embodiment is in a liquid or solid state at ordinary temperatures and pressures, and therefore easier to handle than trimethylamine which is in a gaseous state at ordinary temperatures and pressures and has a characteristic bad odor. No special installation is required for the use or storage of the amine, which may lead to a reduction in production cost of the anion-exchange resin or the ionomer solution. Additionally, in the amine used in the present embodiment, the steric hindrance attributed to the substituent group bonded to the nitrogen atom is relatively small. The N,N-dimethylalkylamine has a structure in which two methyl groups which are sterically small are bonded to a nitrogen atom; therefore, the steric hindrance attributed to the substituent groups is thought to be relatively small. In the bicycloalkane having a nitrogen atom at a bridgehead position, the substituent groups bonded to the nitrogen atom form cyclic structures; therefore, the steric hindrance attributed to the substituent groups is thought to be relatively small. Accordingly, it is thought that, for these amines, a reaction via the unshared electron pair present on the nitrogen atom is relatively unlikely to be inhibited. This is thought to result in the fact that the reaction of conversion to a quaternary amine readily occurs and the quaternary ammonium salt group is readily formed. The resulting anion-exchange resin has a large number of quaternary ammonium salt groups, and also has amine units in which the steric hindrance attributed to the substituent group bonded to the nitrogen atom is relatively small. Therefore, the anion-exchange resin can have an increased ion-exchange capacity and thereby a good ionic conductivity.

The alkyl group contained in the N,N-dimethylalkylamine is, for example, an ethyl, propyl, butyl, or pentyl group, and is preferably an ethyl, propyl, n-butyl, or pentyl group. The N,N-dimethylalkylamine is, for example, N,N-dimethylethylamine, N,N-dimethylpropylamine, N,N-dimethylbutylamine (n-butyldimethylamine), or N,N-dimethyl-pentan-1-amine.

The bicycloalkane having a nitrogen atom at a bridgehead position contains at least one nitrogen atom per molecule and may contain two or more nitrogen atoms per molecule. In the present description, the atom present at a bridgehead position refers to an atom shared by two or more cyclic structures present in the molecule. When two nitrogen atoms are contained, both of the two nitrogen atoms are preferably present at bridgehead positions of the bicycloalkane. When one of the cyclic structures forming the bicyclic structure that has the largest number of constituent atoms is defined as a main ring, the main ring of the bicycloalkane is preferably a saturated heterocycle constituted by 5 to 8 atoms. The atoms constituting the main ring are preferably carbon atoms and nitrogen atoms. Examples of the bicycloalkane having such a structure include 1,4-diazabicyclo[2.2.2]octane, 1-azabicyclo[2.2.2]octane (quinuclidine), and 1-azabicyclo[2.2.1]heptane.

The reaction of the halogenated alkyl group and the amine for forming the quaternary ammonium salt group may be carried out in a solvent. For example, the reaction can be carried out by adding the matrix resin to a solvent and adding the amine to this solvent. The solvent used for this reaction is not particularly limited. When a solvent in which the matrix resin having the halogenated alkyl group is insoluble is used, the resulting anion-exchange resin and the solvent can be separated from each other by filtration after the completion of the reaction. Examples of such a solvent include methanol, ethanol, and acetone.

The anion-exchange resin has an anion (a counter ion) corresponding to the quaternary ammonium salt group. For example, when a chloroalkyl group and an amine are reacted, the counter ion is chloride ion. When this anion-exchange resin is dispersed in an aqueous solution of a hydroxide such as potassium hydroxide or sodium hydroxide, the counter ion is exchanged for the hydroxide ion. The hydroxide ion is highly reactive with carbon dioxide in the air and is converted to hydrogen carbonate ion; therefore, the hydroxide ion may be converted to hydrogen carbonate ion beforehand by bubbling with carbon dioxide gas. That is, the counter ion for the anion-exchange group is, for example, a halogen ion such as chloride ion, hydroxide ion, or hydrogen carbonate ion, and is particularly hydrogen carbonate ion.

The ion-exchange capacity of the anion-exchange resin is not particularly limited. In terms of providing sufficient ionic conductivity to a catalyst layer of a polymer electrolyte fuel cell, the ion-exchange capacity per 1 g of the anion-exchange resin is, for example, 0.1 to 5.0 mmol/g, and particularly 0.4 to 2.5 mmol/g. When the styrene elastomer is a non-crosslinked styrene elastomer, a higher ion-exchange capacity leads to a higher solubility in water; in this case, therefore, the ion-exchange capacity is, for example, 0.4 to 1.5 mmol/g. Such ion-exchange capacity can be measured by a measurement method described for the examples given later.

The concentration of the anion-exchange resin in the ionomer solution is not particularly limited, and may be determined depending on the solubility of the anion-exchange resin in the solvent, the viscosity of the ionomer solution, the amount of the anion-exchange resin to be applied to the electrode catalyst, the degree of penetration into the electrode catalyst, etc. The anion-exchange resin is contained in an amount of, for example, 0.5 to 30 weight%, particularly 1 to 15 weight%, of the total weight of the ionomer solution.

A catalyst electrode composition for polymer electrolyte fuel cells that is obtained according to the present embodiment includes the ionomer solution of the present embodiment and an electrode catalyst.

A member for polymer electrolyte fuel cells of the present embodiment is a member for polymer electrolyte fuel cells that includes an anion-exchange membrane, and this anion-exchange membrane has, on at least one side thereof, a layer formed of the catalyst electrode composition of the present embodiment.

A polymer electrolyte fuel cell of the present embodiment includes the member for polymer electrolyte fuel cells of the present embodiment.

EXAMPLES

Examples and comparative examples of the present invention will be given below. However, the present invention is not limited to these examples.

The physical properties of anion-exchange resins obtained in the examples and comparative examples were measured by the methods described hereinafter.

(Ion-exchange capacity)

An $HCO_3$-type anion-exchange resin was immersed in an aqueous sodium chloride solution (3 mol/L) for 1 day or longer to exchange the counter ion for Cl ion. The resulting anion-exchange resin was dried in an 80°C atmosphere for 1 hour, and then its weight W [g] was measured. The dried anion-exchange resin was immersed in a 1N (1 mol/L) aqueous sodium nitrate solution having a temperature of 60°C for 24 hours to exchange the counter ion for nitrate ion. The amount A [mol] of the freed Cl ion was determined by using a 0.05 N aqueous silver nitrate solution and a potentiometric titrator (COM-2500, manufactured by Hiranuma Sangyo Co., Ltd.). The ion-exchange capacity (IEC) [mmol/g] was determined by the formula below.

$$\text{Ion-exchange capacity (IEC) [mmol/g]} = A \text{ [mol]} \times 1000/W \text{ [g]}$$

(Ionic conductivity)

An ionomer solution (a solution of an $HCO_3$-type anion-exchange resin) was cast onto a petri dish made of fluorine resin. After that, the solution was dried at 60°C to form a cast film. The obtained cast film was cut into a 10-mm-wide piece, which was exposed to 60°C water. After a lapse of 1 hour, an AC impedance was measured by a four-terminal method using an LCR meter (Chemical Impedance Meter 3532-80, manufactured by HIOKI E.E. CORPORATION). The measuring frequency was set to range from 10 kHz to 1 MHz. For the values of the measured impedance, their real parts were plotted on the horizontal axis, their imaginary parts were plotted on the vertical axis, and the real part of the minimum value was defined as a film resistance R [Ω]. Denoting the thickness of the film by t [μm], the width of the film by h [cm], and the distance between voltage measurement terminals by L [cm], the ionic conductivity [mS/cm] was determined from the following formula.

$$\text{Ionic conductivity [mS/cm]} = (L \text{ [cm]} \times 10^3/(R \text{ [}\Omega\text{]} \times t \text{ [}\mu\text{m]} \times h \text{ [cm]} \times 10^{-4})$$

(Synthesis Example 1)

An amount of 14.00 g of styrene-(ethylene/butylene)-styrene block copolymer (SEBS) (the weight of the styrene moiety was 30% of the total weight of the copolymer) and 126.00 g of chloromethyl methyl ether were put into a 200 ml three-neck flask, followed by stirring under nitrogen flow to dissolve the SEBS. To this solution was added 0.7035 g of zinc chloride ($ZnCl_2$), and a reaction was allowed to proceed while the solution was stirred under nitrogen flow, with the solution temperature maintained at 40°C. After a lapse of 1 hour, the solution having undergone the reaction was added dropwise into a large amount of methanol. The precipitated solid was collected by filtration and dried. The weight of the dried solid was 14.87 g. The procedures as thus far described were repeated several times, and a necessary amount of the dried solid was produced. The dried solid was defined as an anion-exchange resin precursor 1. For the anion-exchange resin precursor 1, chlorine element analysis was performed. The amount of chloromethyl groups determined from the result of the element analysis was 1.467 mmol/g.

(Example 1)

Into an 1L flask were put 100 g of n-butyldimethylamine and 300 g of acetone. Into this flask was put 10.00 g of the anion-exchange resin precursor 1, followed by continuous stirring at room temperature. After a lapse of 3 days, the resulting solid product was collected by filtration. This solid product was put into 0.5N (0.5 mol/L) hydrochloric acid, followed by stirring for 1 hour and then by collection by filtration. Thus, a Cl-type anion-exchange resin 1 was obtained. This Cl-type anion-exchange resin 1 was put into a large excess of a 0.5N (0.5 mol/L) aqueous sodium hydroxide solution, which was stirred at room temperature. After a lapse of 1 day, the resulting solid product was washed with pure water to obtain an OH-type anion-exchange resin 1. This anion-exchange resin was put into pure water, followed by carbon dioxide bubbling for 3 hours and then by drying. The weight of the dried anion-exchange resin was 11.64 g. This dried resin was defined as an $HCO_3$-type anion-exchange resin 1. This $HCO_3$-type anion-exchange resin 1 was dissolved in a mixed solvent of tetrahydrofuran and 1-propanol (the weight ratio tetrahydrofuran : 1-propanol = 7 : 3) so that the content of the $HCO_3$-type anion-exchange resin 1 was 5 weight%. Thus, a solution of the $HCO_3$-type anion-exchange resin 1 (ionomer solution) was obtained.

(Example 2)

Into a 1L flask were put 30 g of 1,4-diazabicyclo[2.2.2]octane and 270 g of acetone. Into this flask was put 10.00 g of the anion-exchange resin precursor 1, followed by continuous stirring at room temperature. After a lapse of 1 day, the resulting solid product was collected by filtration. This solid product was washed with acetone, followed by collection by filtration, then by further washing with pure water, and finally by collection by filtration. Thus, a Cl-type anion-exchange resin 2 was obtained. This Cl-type anion-exchange resin 2 was put into a large excess of 0.5N (0.5 mol/L) aqueous sodium hydroxide solution, which was stirred at room temperature. After a lapse of 1 day, the resulting solid product was washed with pure water to obtain an OH-type anion-exchange resin 2. This anion-exchange resin was put into pure water, followed by carbon dioxide bubbling for 3 hours and then by drying. The weight of the dried anion-exchange resin was 11.95 g. This dried resin was defined as an $HCO_3$-type anion-exchange resin 2. This $HCO_3$-type anion-exchange resin 2 was dissolved in a mixed solvent of tetrahydrofuran and 1-propanol (the weight ratio tetrahydrofuran : 1-propanol = 7 : 3) so that the content of the $HCO_3$-type anion-exchange resin 2 was 5 weight%. Thus, a solution of the $HCO_3$-type anion-exchange resin 2 (ionomer solution) was obtained.

(Comparative Example 1)

Into a 200 ml flask were put 50 g of an ethanol solution of trimethylamine (4.2 mol/L) and 50 g of acetone. Into this flask was put 2.00 g of the anion-exchange resin precursor 1, followed by continuous stirring at room temperature. After a lapse of 3 days, the resulting solid product was collected by filtration. This solid product was put into 0.5 N (0.5 mol/L) hydrochloric acid, followed by stirring for 1 hour and then by collection by filtration. Thus, a Cl-type anion-exchange resin 3 was obtained. This Cl-type anion-exchange resin 3 was put into a large excess of 0.5N (0.5 mol/L) aqueous sodium hydroxide solution, which was stirred at room temperature. After a lapse of 1 day, the resulting solid product was washed with pure water to obtain an OH-type anion-exchange resin 3. This anion-exchange resin was put into pure water, followed by carbon dioxide bubbling for 3 hours and then by drying. The weight of the dried anion-exchange resin was 2.18 g. This dried resin was defined as an $HCO_3$-type anion-exchange resin 3. This $HCO_3$-type anion-exchange resin 3 was dissolved in a mixed solvent of tetrahydrofuran and 1-propanol (the weight ratio tetrahydrofuran : 1-propanol = 7 : 3) so that the content of the $HCO_3$-type anion-exchange resin 3 was 5 weight%. Thus, a solution of the $HCO_3$-type anion-exchange resin 3 (ionomer solution) was obtained.

(Comparative Example 2)

Into a 200 mL flask were put 20 g of triethylamine and 60 g of acetone. Into this flask was put 2.00 g of the anion-exchange resin precursor 1, followed by continuous stirring at room temperature. After a lapse of 3 days, the resulting solid product was collected by filtration. This solid product was put into 0.5 N (0.5 mol/L) hydrochloric acid, followed by stirring for 1 hour and then by collection by filtration. Thus, a Cl-type anion-exchange resin 4 was obtained. This Cl-type anion-exchange resin 4 was put into a large excess of 0.5N (0.5 mol/L) aqueous sodium hydroxide solution, which was stirred at room temperature. After a lapse of 1 day, the resulting solid product was washed with pure water to obtain an OH-type anion-exchange resin 4. This anion-exchange resin was put into pure water, followed by carbon dioxide bubbling for 3 hours and then by drying. The weight of the dried anion-exchange resin was 2.24 g. This dried resin was defined as an $HCO_3$-type anion-exchange resin 4. This $HCO_3$-type anion-exchange resin 4 was dissolved in a mixed solvent of tetrahydrofuran and 1-propanol (the weight ratio tetrahydrofuran : 1-propanol = 7 : 3) so that the content of the $HCO_3$-type anion-exchange resin 4 was 5 weight%. Thus, a solution of the $HCO_3$-type anion-exchange

resin 4 (ionomer solution) was obtained.

The results of evaluation of the fabricated anion-exchange resins are shown in Table 1.

[Table 1]

| Sample | | Amine | Ion-exchange capacity [mmol/g] | Ionic conductivity [mS/cm] |
|---|---|---|---|---|
| Example 1 | Cl-type | n-butyldimethylamine | 1.22 | - |
| | HCO₃-type | | - | 14.5 |
| Example 2 | Cl-type | 1,4-diazabicyclo[2.2.2]octane | 1.20 | |
| | HCO₃-type | | - | 15.1 |
| Comparative Example 1 | Cl-type | Trimethylamine | 1.23 | - |
| | HCO₃-type | | - | 14.9 |
| Comparative Example 2 | Cl-type | Triethylamine | 0.978 | - |
| | HCO₃-type | | - | 8.07 |

As shown in Table 1, the anion-exchange resin for which n-butyldimethylamine was used (Example 1) and the anion-exchange resin for which 1,4-diazabicyclo[2.2.2]octane was used (Example 2) had ion-exchange capacity and ionic conductivity comparable to those of the anion-exchange resin for which trimethylamine was used (Comparative Example 1).

Both n-butyldimethylamine and triethylamine are amines that are in liquid form at ordinary temperatures and pressures, and they have equal molecular weights. However, the ion-exchange resin for which n-butyldimethylamine was used (Example 1) had higher ion-exchange capacity and ionic conductivity than the ion-exchange resin for which triethylamine was used (Comparative Example 2). This is thought to be due to the influence of steric hindrance around the nitrogen atom. It is thought that the steric hindrance around the nitrogen atom is smaller in n-butyldimethylamine having a dimethyl group than in triethylamine. This is thought to result in the fact that n-butyldimethylamine is more adapted for introduction of the anion-exchange group and that an anion-exchange resin having good ion-exchange capacity and ionic conductivity was obtained.

As for 1,4-diazabicyclo[2.2.2]octane, it is thought that due to its having a structure in which the two nitrogen atoms in the molecule are bonded together via three ethyl chains, the steric hindrance around the nitrogen atoms is relatively small, and a reaction via the unshared electron pairs of the nitrogen atoms can occur relatively readily. This is thought to result in the fact that an anion-exchange resin having good ion-exchange capacity and ionic conductivity was obtained. In addition, 1,4-diazabicyclo[2.2.2]octane is an amine that is in a solid state at ordinary temperatures and pressures, and is therefore easy to handle.

INDUSTRIAL APPLICABILITY

With the present invention, an ionomer solution containing an anion-exchange resin dissolved in a solvent can be obtained. This ionomer solution can be used in a catalyst electrode composition for polymer electrolyte fuel cells. This catalyst electrode composition can be used in a member for polymer electrolyte fuel cells. This member for polymer electrolyte fuel cells can be used in a polymer electrolyte fuel cell.

**Claims**

1. An ionomer solution comprising an anion-exchange resin and a solvent, wherein
   the anion-exchange resin is dissolved in the solvent,
   the anion-exchange resin comprises a matrix resin and an anion-exchange group,
   the matrix resin comprises a styrene elastomer, and
   the anion-exchange group is a quaternary ammonium salt group having at least one unit derived from an amine selected from the group consisting of an N,N-dimethylalkylamine having an alkyl group having two or more carbon atoms and a bicycloalkane having a nitrogen atom at a bridgehead position.

2. The ionomer solution according to claim 1, wherein the N,N-dimethylalkylamine is n-butyldimethylamine.

3. The ionomer solution according to claim 1, wherein the bicycloalkane having a nitrogen atom at a bridgehead position is 1,4-diazabicyclo[2.2.2]octane.

4. The ionomer solution according to claim 1, wherein
   the matrix resin further comprises an alkyl chain bonded to an aromatic ring of the styrene elastomer, and
   the anion-exchange group is bonded to the alkyl chain.

5. The ionomer solution according to claim 4, wherein the alkyl chain is an alkyl chain having 1 to 4 carbon atoms.

6. The ionomer solution according to claim 4, wherein the alkyl chain is a methyl chain.

7. A catalyst electrode composition for polymer electrolyte fuel cells, comprising the ionomer solution according to claim 1 and an electrode catalyst.

8. A member for polymer electrolyte fuel cells, comprising an anion-exchange membrane,
   the anion-exchange membrane having a layer on at least one side thereof, the layer being formed of the catalyst electrode composition according to claim 7.

9. A polymer electrolyte fuel cell, comprising the member for polymer electrolyte fuel cells according to claim 8.

## INTERNATIONAL SEARCH REPORT

| International application No. |
| --- |
| PCT/JP2014/004760 |

**A. CLASSIFICATION OF SUBJECT MATTER**
*C08L25/18*(2006.01)i, *H01M4/86*(2006.01)i, *H01M8/02*(2006.01)i, *H01M8/10* (2006.01)i

According to International Patent Classification (IPC) or to both national classification and IPC

**B. FIELDS SEARCHED**

Minimum documentation searched (classification system followed by classification symbols)
C08L25/18, H01M4/86, H01M8/02, H01M8/10, C08F8/00-8/50, C08C19/00-19/44, C08F212/00-212/36

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2013-107916 A (Tokuyama Corp.), 06 June 2013 (06.06.2013), entire text & WO 2011/115175 A1 & TW 201204755 A | 1-9 |
| A | JP 2002-367626 A (Tokuyama Corp.), 20 December 2002 (20.12.2002), entire text (Family: none) | 1-9 |
| A | JP 4-215856 A (Tokuyama Soda Co., Ltd.), 06 August 1992 (06.08.1992), entire text (Family: none) | 1-9 |

☒ Further documents are listed in the continuation of Box C.   ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 15 December, 2014 (15.12.14) | 22 December, 2014 (22.12.14) |

| Name and mailing address of the ISA/<br>Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
|---|
| PCT/JP2014/004760 |

**C (Continuation).   DOCUMENTS CONSIDERED TO BE RELEVANT**

| Category* | Citation of document, with indication, where appropriate, of the relevant passages | Relevant to claim No. |
|---|---|---|
| A | US 2008/0113244 A1  (KURARAY CO., LTD,), <br> 15 May 2008 (15.05.2008), <br> entire text <br> & JP 2006-202737 A      & EP 1852928 A1 <br> & WO 2006/068279 A1     & KR 10-2007-0086091 A <br> & CN 101107738 A        & AT 534154 T | 1-9 |
| A | JP 2-502924 A  (SmithKlein and French Laboratories Ltd.), <br> 13 September 1990 (13.09.1990), <br> entire text <br> & US 4954339 A          & EP 322209 A1 <br> & WO 1989/005828 A1 | 1-9 |
| A | JP 9-208625 A  (Tohoku Electric Power Co., Inc.), <br> 12 August 1997 (12.08.1997), <br> entire text <br> (Family: none) | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002367626 A